# FASCICULE DE BREVET EUROPEEN

(11) **EP 4 013 981 B1**
(45) Date de publication et mention de la délivrance du brevet: **02.08.2023**
(21) Numéro de dépôt: 20781050.8
(22) Date de dépôt: 14.09.2020
(51) Int. Cl.: C25B 9/77, H01M 8/247, F16J 15/08, H01M 8/2432, H01M 8/12, C25B 1/04, C25B 9/73

(54) **ENSEMBLE D'UN EMPILEMENT À OXYDES SOLIDES DE TYPE SOEC/SOFC ET D'UN SYSTÈME DE COUPLAGE ÉTANCHE À HAUTE TEMPÉRATURE**
FESTOXIDSTAPPEL VOM TYP SOEC/SOFC UND HOCHTEMPERATUR DICHTES KUPPLUNGSSYSTEM
SOLID OXIDE STACK OF TYPE SOEC/SOFC AND HIGH TEMPERATURE GASTIGHT COUPLING SYSTEM

(30) Priorité: 18.09.2019 FR 1910287
(43) Date de publication de la demande: 22.06.2022
(73) Titulaire: Commissariat à l'Energie Atomique et aux Energies Alternatives, 75015 Paris (FR)
(72) Inventeur: PLANQUE, Michel, 38054 GRENOBLE CEDEX 09 (FR); MONNET, Thibault, 38054 GRENOBLE CEDEX 09 (FR)
(74) Mandataire: Brevalex
(86) Numéro de dépôt international: PCT/FR2020/051584
(87) Numéro de publication internationale: WO 2021/053288

(56) Documents cités:
- EP-A1- 2 071 216
- WO-A1-2019/122697
- FR-A1- 3 045 215
- FR-A1- 3 061 495
- JP-A- 2008 284 505
- BRARD P ET AL: "Viscoplastic behavior of a FeCrAl alloy for high temperature steam electrolysis (HTSE) sealing applications between 700C and 900C", MATERIALS SCIENCE AND ENGINEERING: A, ELSEVIER, AMSTERDAM, NL, vol. 528, no. 12, 18 janvier 2011 (2011-01-18), pages 4092-4097, XP028165865, ISSN: 0921-5093, DOI: 10.1016/J.MSEA.2011.01.050 [extrait le 2011-01-28]

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Température Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comprenant un empilement à oxydes solides de type SOEC/SOFC et un système de couplage étanche à haute température de l'empilement, ainsi qu'un système comprenant un tel ensemble et un four couplé audit empilement par le biais d'un tel système de couplage.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (Oz), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en oeuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

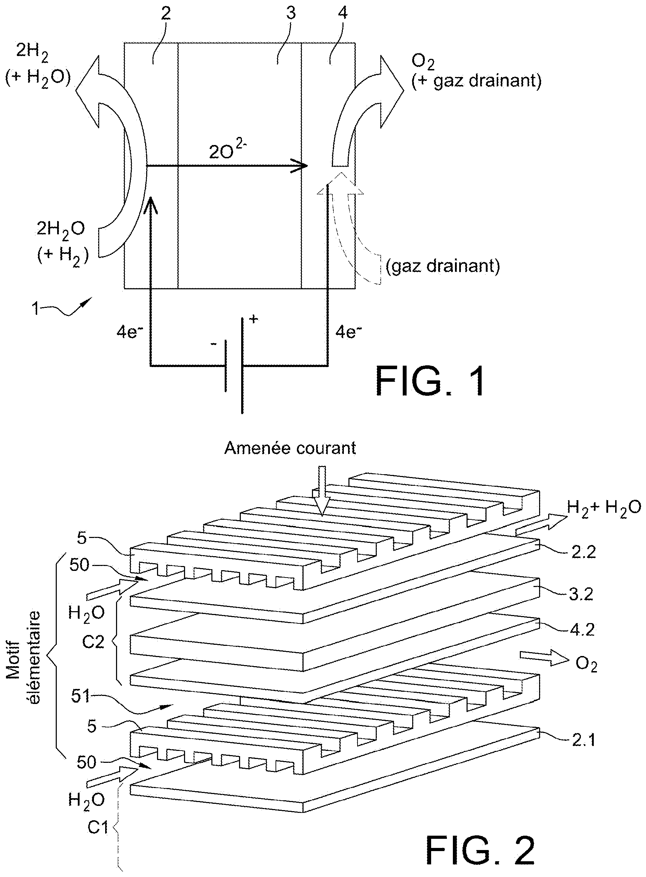

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

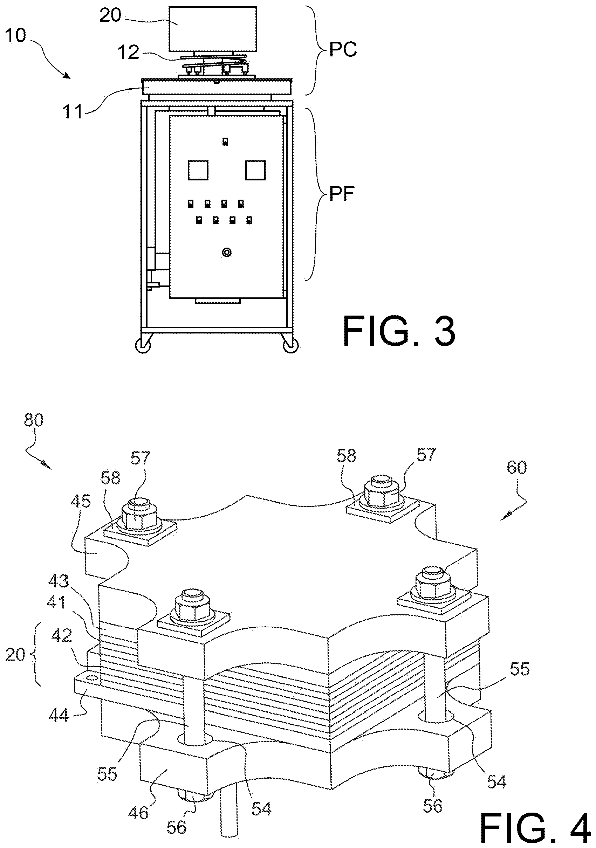

Les gaz entrants et sortants dans un empilement d'électrolyse à haute température (SOEC) ou de pile à combustible (SOFC) fonctionnant à haute température peuvent être gérés par le biais de dispositifs appropriés d'un four tel que celui illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

Les couplages des dispositifs d'amenée et de sortie des gaz se font le plus souvent au niveau des parties froides PF, en particulier par des raccords de serrage mécanique double bague, des raccords à étanchéité de surface par joint métallique VCR^{®}, des liaisons soudées ou encore des traversées étanches de cloisons.

Dans le cas des raccords de serrage mécanique double bague, les deux bagues séparent les fonctions d'étanchéité et de serrage de tube. La bague avant crée une étanchéité tandis que la bague arrière permet de faire avancer la bague avant axialement et applique un serrage effectif de tube radialement. Ce principe permet d'obtenir un très bon serrage de tube et une très bonne étanchéité aux fuites de gaz. De plus, son installation est facile et il présente une très bonne résistance à la fatigue causée par les vibrations. Le démontage est aisé en cas d'absence de soudage. Toutefois, ses inconvénients majeurs sont justement son absence de résistance aux hautes températures de sorte que la bague arrière, la bague avant et le tube peuvent se souder ensemble par soudage diffusion rendant la jonction indémontable.

Dans le cas des raccords à étanchéité de surface par joint métallique VCR^{®}, l'étanchéité est obtenue lorsque le joint est compressé par deux bourrelets lors du serrage d'un écrou mâle ou d'un corps six pans avec un écrou femelle. Ce principe permet une très bonne étanchéité, la possibilité d'utiliser des joints différents (nickel, cuivre, inox, ...) selon la configuration la plus appropriée, et un montage/démontage facile avec changement du joint lors de ces opérations. Toutefois, cette solution ne convient pas à haute température, son fonctionnement ne permettant une température maximale que d'environ 537°C.

Dans le cas des liaisons soudées, une étanchéité totale est obtenue par le fait de souder les tubes entre eux par un procédé de type TIG (pour « Tungsten Inert Gas » en anglais) ou par soudeuse orbitale, c'est-à-dire un procédé TIG couplé à une buse rotative. Cependant, les opérations de soudure sur un empilement 20 monté dans un four 10 sont très compliquées du fait de l'accessibilité réduite pour pouvoir souder les tubes sur le pourtour.

Enfin, il existe un système de couplage résistant à une température d'environ 870°C, utilisant des traversées étanches de cloisons pour les passages de capteurs, sondes, signaux électriques et tubes. Ces traversées étanches de cloisons se présentent sous la forme d'un raccord fileté en inox 316L qui est à visser sur la paroi d'une tuyauterie, d'une cuve ou d'un couvercle. Selon leur version, ces traversées accueillent un ou plusieurs éléments traversants, de différents types, tailles et diamètres. Ces traversées permettent donc le passage d'éléments sans discontinuité et ne permettent pas la jonction étanche de deux éléments.

Les couplages des dispositifs d'amenée et de sortie des gaz au niveau des parties froides PF du four 10 constituent un inconvénient majeur car ces parties froides PF sont éloignées des résistances du four 10 et encombrées par les périphériques tels que les échangeurs, les isolants, les condenseurs, entre autres. Ceci implique de privilégier la réalisation des liaisons dans les parties chaudes PC en souhaitant pouvoir les rendre démontables et réutilisables facilement.

De plus, l'utilisation de l'enceinte du four 10 pour préchauffer les gaz d'entrée amène également à réaliser le tube en boucle 12, d'une longueur d'environ 2,5 à 3 m, pour utiliser le rayonnement des résistances chauffantes du four 10, ce qui ajoute de la complexité dans les cintrages pour faire en sorte que les tubes arrivent au bon endroit dans un espace confiné.

En outre, si l'on souhaite pouvoir démonter l'empilement 20 pour pouvoir le faire fonctionner à un autre emplacement, lui conférant alors un caractère de type « Plug & Play » (PnP), soit de type « branche et utilise », il faudrait d'abord rompre les liaisons mécaniquement, par exemple à l'aide d'une scie à métaux, et préparer les nouvelles liaisons pour mettre l'empilement 20 sur un autre four, ce qui complique grandement les manipulations.

Enfin, il est à noter qu'un tel empilement 20 est très fragile et il est nécessaire d'effectuer le moins d'opérations possibles lors d'un changement d'emplacement. Ainsi, il faut notamment pouvoir éviter les vibrations, les chocs et éviter aussi de le retourner.

Les solutions de couplage évoquées précédemment ne permettent pas de répondre aux besoins énoncés ci-dessus. En particulier, les raccords à serrage mécanique double bague se soudent à haute température. Les soudures ne répondent pas à la problématique évoquée du fait de la complexité du soudage (accès difficile) et elles n'évitent pas la découpe des tubes pour le démontage.

Les solutions de couplage de l'art antérieur ne permettent pas de retirer l'empilement 20 d'un four 10 pour le reconnecter sur un autre four 10, c'est-à-dire d'avoir un caractère « Plug & Play », sans rompre les jonctions mécaniquement, ce qui oblige les opérateurs chargés du montage/démontage à réaliser un travail fastidieux de cintrage, de couplage et d'adaptation.

On connaît de la demande de brevet français FR 3 061495 A1 un exemple de système démontable et étanche pour raccordement à haute température en mode SOEC/SOFC. Un joint mica est utilisé entre une embase lisse et une embase filetée pour l'obtention de liaisons étanches démontables et réutilisables. Ce système permet de résoudre le couplage à haute température mais peut toutefois impliquer un taux de fuite trop important. De plus, le joint mica peut laisser des résidus à la suite du cyclage thermique qu'il faut alors supprimer avant montage d'un autre joint.

Il existe encore un besoin pour améliorer les solutions de couplage connues de l'art antérieur d'un empilement d'électrolyse à haute température (SOEC) ou de pile à combustible (SOFC).

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception optimisée de couplage d'un empilement d'électrolyse à haute température (SOEC) ou de pile à combustible (SOFC). En particulier, elle vise à réaliser en partie chaude, c'est-à-dire à l'intérieur de l'enceinte d'un four, et au droit des entrées et sorties de gaz, des liaisons étanches à 860°, démontables et réutilisables. Ce système doit pouvoir être intégré à un empilement présentant un caractère de type « Plug & Play » (PnP) (système auto-serrant), comme décrit dans la demande de brevet français FR 3 045 215 A1.

L'invention a ainsi pour objet, selon l'un de ses aspects, un ensemble, comportant :
- un empilement à oxydes solides de type SOEC/SOFC fonctionnant à haute température, comportant :
   - une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,
- un système de serrage de l'empilement à oxydes solides de type SOEC/SOFC, comportant une plaque de serrage supérieure et une plaque de serrage inférieure, entre lesquelles l'empilement à oxydes solides de type SOEC/SOFC est enserré, chaque plaque de serrage comportant au moins deux orifices de serrage, le système de serrage comportant en outre :
   - au moins deux tiges de serrage destinées à s'étendre chacune au travers d'un orifice de serrage de la plaque de serrage supérieure et au travers d'un orifice de serrage correspondant de la plaque de serrage inférieure pour permettre l'assemblage entre elles des plaques de serrage supérieure et inférieure,
   - des moyens de serrage au niveau de chaque orifice de serrage des plaques de serrage supérieure et inférieure destinés à coopérer avec lesdites au moins deux tiges de serrage pour permettre l'assemblage entre elles des plaques de serrage supérieure et inférieure,
caractérisé en ce qu'il comporte en outre :
- au moins un système de couplage étanche à haute température de l'empilement à oxydes solides de type SOEC/SOFC, monté dans l'une au moins des plaques de serrage supérieure et inférieure, comportant :
   - une embase de serrage, comprenant un filetage sur sa surface extérieure à une extrémité montée dans ladite l'une au moins des plaques de serrage supérieure et inférieure, l'embase de serrage comprenant un premier conduit interne traversant pour permettre le passage d'un tube d'entrée et/ou de sortie de gaz,
   - une embase d'appui, située dans le premier conduit interne de l'embase de serrage, dont une deuxième extrémité est destinée à être fixée audit tube d'entrée et/ou de sortie de gaz, l'embase d'appui comprenant un deuxième conduit interne traversant pour permettre le passage de gaz provenant dudit tube et/ou de l'empilement à oxydes solides de type SOEC/SOFC,
   - un joint d'étanchéité, présentant une forme de « C », positionné contre une première extrémité, opposée à la deuxième extrémité, de l'embase d'appui, et en ce que ladite l'une au moins des plaques de serrage supérieure et inférieure comporte au moins un conduit traversant de passage de gaz, destiné à être en communication fluidique avec l'empilement à oxydes solides de type SOEC/SOFC et ledit tube d'entrée et/ou de sortie de gaz, ledit au moins un conduit de passage comprenant :
      - une surface d'appui du joint d'étanchéité de sorte que le joint d'étanchéité soit positionné entre la surface d'appui et la première extrémité de l'embase d'appui,
      - un lamage fileté pour recevoir le filetage de l'embase de serrage, le joint d'étanchéité étant formé par un joint métallique flexible en forme de "C", comprenant une âme constituée par un ressort hélicoïdal métallique et une première enveloppe en métal dans laquelle est encastré le ressort.

L'ensemble selon l'invention peut en outre comporter l'une ou plusieurs des caractéristiques suivantes prises isolément ou suivant toutes combinaisons techniques possibles.

L'embase de serrage peut comporter une première surface d'appui, située dans le premier conduit interne. L'embase d'appui peut comporter une deuxième surface d'appui. Les première et deuxième surfaces d'appui peuvent alors être en contact l'une avec l'autre selon un contact de type plan sur plan, formé dans le sens d'écoulement du gaz.

Par ailleurs, l'embase d'appui peut comporter un logement, sur sa première extrémité, pour loger au moins partiellement le joint d'étanchéité.

L'embase de serrage et l'embase d'appui peuvent être réalisées dans le même matériau que ladite l'une au moins des plaques de serrage supérieure et inférieure.

Le ressort hélicoïdal métallique peut être à spires jointives ou non jointives. Un ressort à spires non jointives peut apporter plus de souplesse.

Le joint métallique flexible en forme de « C » peut comporter une seconde enveloppe en métal dans laquelle est encastrée la première enveloppe. La présence d'une seconde enveloppe peut être avantageuse car elle va permettre d'épouser les défauts de surface entraînant une meilleure étanchéité. De préférence, la deuxième enveloppe est en matériau plus ductile que la première enveloppe.

La première enveloppe peut par exemple être en un superalliage à base de nickel. La deuxième enveloppe peut par exemple être en or ou en cuivre.

L'ensemble peut comporter une plaque terminale supérieure et une plaque terminale inférieure, entre lesquelles la pluralité de cellules électrochimiques et la pluralité d'interconnecteurs intermédiaires sont enserrées.

De plus, ladite au moins l'une des plaques de serrage supérieure et inférieure peut avantageusement être fabriquée par une technique de fabrication additive, étant notamment réalisée en acier austénitique réfractaire, en particulier de type AISI 310.

Par ailleurs, ladite au moins l'une des plaques de serrage supérieure et inférieure peut présenter une épaisseur comprise entre 20 et 30 mm, notamment de l'ordre de 25 mm.

De plus, l'invention a encore pour objet, selon un autre de ses aspects, un système, caractérisé en ce qu'il comporte :
- un ensemble tel que défini précédemment,
- un four, auquel est raccordé au moins un tube d'entrée et/ou de sortie de gaz, et sur lequel l'empilement à oxydes solides de type SOEC/SOFC fonctionnant à haute température est couplé pour l'amenée et la sortie des gaz par le biais dudit au moins un système de couplage étanche à haute température.

L'embase d'appui peut être soudée, notamment par soudure de type TIG et/ou par soudure à l'arc, sur l'extrémité dudit au moins un tube d'entrée et/ou de sortie de gaz, dans son alignement.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
Figure 1 est une vue schématique montrant le principe de fonctionnement d'un électrolyseur à oxydes solides à haute température (SOEC),
Figure 2 est une vue schématique éclatée d'une partie d'un électrolyseur à oxydes solides à haute température (SOEC) comprenant des interconnecteurs selon l'art antérieur,
Figure 3 illustre le principe de l'architecture d'un four sur lequel un empilement d'électrolyse à haute température (SOEC) ou de pile à combustible (SOFC) fonctionnant à haute température est placé,
Figure 4 représente, en perspective et par observation du dessus, un exemple d'un ensemble conforme à l'invention comprenant un empilement à oxydes solides de type SOEC/SOFC et un système de serrage de l'empilement, pouvant comporter un système de couplage étanche à haute température,
Figure 5 représente, en perspective et par observation du dessous, un autre exemple d'ensemble conforme à l'invention comprenant un empilement à oxydes solides de type SOEC/SOFC et un système de serrage de l'empilement, comprenant en outre quatre systèmes de couplage étanche à haute température,
Figure 6 représente, selon une vue en coupe longitudinale partielle, un détail de l'ensemble de [Fig. 4] avec la plaque de serrage inférieure et deux systèmes de couplage étanche à haute température, et
Figure 7 représente, selon une vue agrandie de la zone A représentée sur [Fig. 6], un système de couplage étanche à haute température de l'ensemble de [Fig. 5].

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

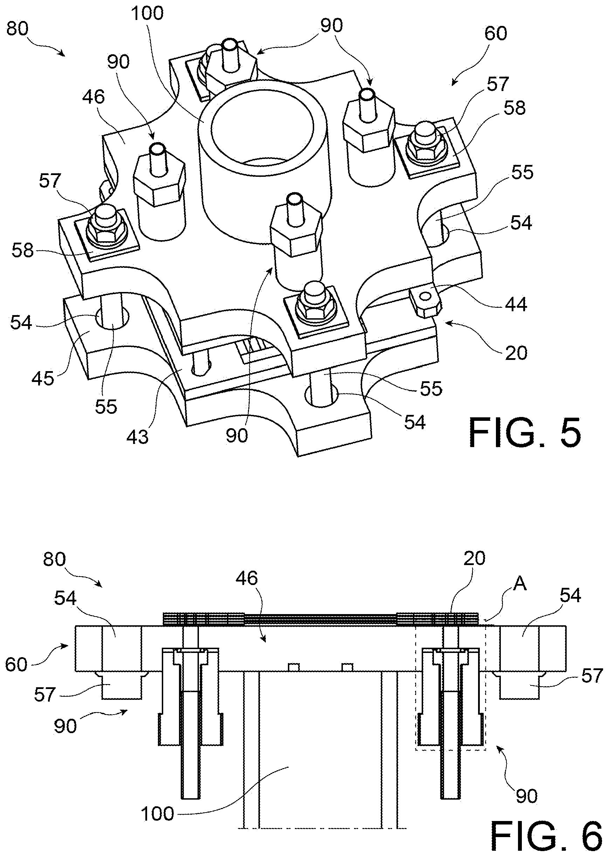

En référence à la figure 4, on a illustré un exemple d'ensemble 80 comprenant un empilement 20 à oxydes solides de type SOEC/SOFC et un système de serrage 60, cet ensemble 80 pouvant comprendre un système de couplage étanche à haute température 90 tel que décrit par la suite en référence aux figures 5 à 7.

De façon avantageuse, l'ensemble 80 selon l'invention présente une structure semblable à celle de l'ensemble décrit dans la demande de brevet français FR 3 045 215 A1, hormis la présence ici d'un système de couplage étanche à haute température 90, c'est-à-dire que l'empilement 20 présente un caractère de type « Plug & Play » (PnP).

Aussi, de façon commune aux différents modes de réalisation de l'invention décrits par la suite, et comme visible sur la figure 4, l'ensemble 80 comporte un empilement 20 à oxydes solides de type SOEC/SOFC fonctionnant à haute température.

Cet empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. Cet ensemble de cellules électrochimiques 41 et d'interconnecteurs intermédiaires 42 peut également être désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Par ailleurs, l'ensemble 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré.

Chaque plaque de serrage 45, 46 du système de serrage 60 comporte quatre orifices de serrage 54.

De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46.

Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46.

Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Conformément à l'invention, l'ensemble 80 comporte au moins un système de couplage étanche à haute température 90 de l'empilement 20, par exemple tel que celui décrit en référence aux figures 5 à 7 mais non visible sur la figure 4, monté dans la plaque de serrage inférieure 46.

On va maintenant décrire un tel exemple de système de couplage étanche à haute température 90 en référence aux figures 5 à 7 relatives à un même mode de réalisation représenté selon différentes vues. Ce couplage est réalisé en zone chaude d'arrivée des gaz.

Dans cet exemple, l'ensemble 80 comporte quatre systèmes de couplage étanche à haute température 90 montés sur la plaque de serrage inférieure 46, à proximité des quatre écrous de serrage 57.

Ainsi, ces quatre systèmes de couplage étanche à haute température 90, pour le couplage au four 10, sont répartis régulièrement autour d'un plot d'appui 100, solidarisé à la plaque de serrage inférieur 46, destiné à permettre l'appui de l'ensemble 80 dans le four 10.

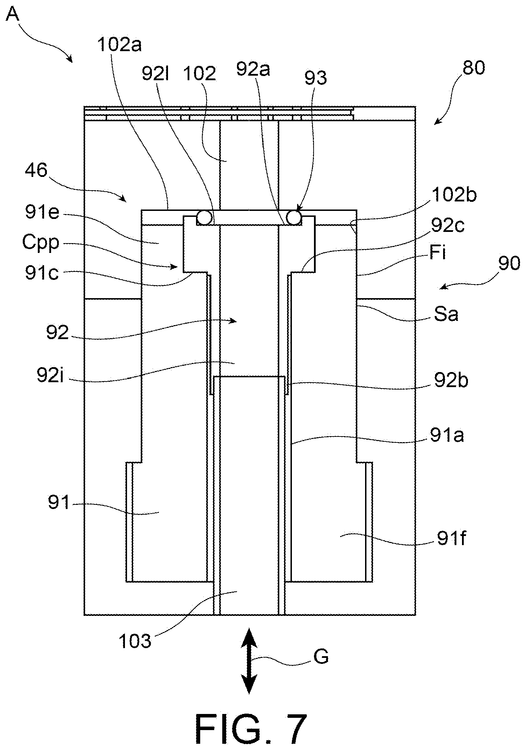

Comme plus particulièrement visible sur la figure 7, chaque système de couplage étanche 90 comporte tout d'abord une embase de serrage 91. Cette embase de serrage 91 comporte une première extrémité 91e dont la surface extérieure Sa est pourvue d'un filetage Fi, et une deuxième extrémité opposée 91f formant la tête de vissage de l'embase de serrage 91. La première extrémité 91e est montée dans la plaque de serrage inférieure 46.

De plus, cette embase de serrage 91 comporte un premier conduit interne traversant 91a, débouchant sur les première 91e et deuxième 91f extrémités, qui permet le passage d'un tube 103 destiné à assurer l'entrée et/ou la sortie de gaz G.

Par ailleurs, chaque système de couplage étanche 90 comporte également une embase d'appui 92. Cette embase d'appui 92 comporte une première extrémité 92a formant la tête de l'embase d'appui 92 et une deuxième extrémité opposée 92b. L'embase d'appui 92 est située dans le premier conduit interne 91a de l'embase de serrage 91. Sa deuxième extrémité 92b est fixée au tube 103. Par exemple, elle peut être rapportée soudée, par procédé TIG ou tout autre moyen de soudure, dans l'alignement du tube 103.

De plus, l'embase d'appui 92 comprend un deuxième conduit interne traversant 92i, débouchant sur les première 92a et deuxième 92b extrémités, qui permet le passage de gaz G provenant du tube 103 et/ou de l'empilement 20 à oxydes solides de type SOEC/SOFC.

Lors de la mise en place de chaque système de couplage étanche 90, l'embase de serrage 91 est préférentiellement glissée sur le tube 103, en prenant soin de vérifier le sens d'introduction de sorte que le filetage coopère avec le lamage fileté 102b, décrit par la suite, de la plaque de serrage inférieure 46, avant de souder l'embase d'appui 92 en bout du tube 103.

En outre, chaque système de couplage étanche 90 comporte également un joint d'étanchéité 93, préférentiellement métallique, qui présente une forme de « C ». Ce joint d'étanchéité 93 est positionné contre la première extrémité 92a de l'embase d'appui 92.

Ce joint d'étanchéité 93 se distingue des joints statiques habituels de l'art antérieur, fonctionnant plutôt comme un joint plat entre deux brides avec très peu, voire aucun mouvement relatif entre elles.

Avantageusement, le joint d'étanchéité 93 est formé par un joint métallique flexible comprenant : une âme constituée par un ressort hélicoïdal métallique à spires jointives refermé sur lui-même et présentant, à l'état de repos, la forme d'un tore ; une première enveloppe en métal non ductile dans laquelle est encastré le ressort, cette enveloppe ayant, à l'état de repos, la forme d'une surface torique dont le cercle générateur ne se referme pas sur lui-même ; et une seconde enveloppe en métal ductile dans laquelle est encastrée la première enveloppe et ayant elle aussi, à l'état de repos, la forme d'une surface torique dont le cercle générateur ne se referme pas sur lui-même. Un tel exemple de joint d'étanchéité est décrit dans la demande de brevet français FR 2 151186 A1.

Le joint d'étanchéité 93 peut être réalisé en en superalliage à base de nickel, en particulier de type Inconel 718. Il peut présenter un diamètre extérieur d'environ 2,5 mm et un diamètre intérieur d'environ 12,5 mm. Il peut être revêtu d'or et le couple de serrage peut être de l'ordre de 12 N.m.

Afin de pouvoir monter chaque système de couplage étanche 90 sur la plaque de serrage inférieure 46, celle-ci comporte un conduit traversant de passage 102 de gaz G, en communication fluidique avec l'empilement 20 à oxydes solides de type SOEC/SOFC et le tube 103 d'entrée et/ou de sortie de gaz G.

Comme toujours visible sur la figure 7, ce conduit de passage 102 comporte une surface d'appui 102a du joint d'étanchéité 93 de sorte que le joint d'étanchéité 93 soit positionné entre la surface d'appui 102a et la première extrémité 92a de l'embase d'appui 92.

De plus, le conduit de passage 102 de la plaque de serrage inférieure 46 comporte également un lamage fileté 102b pour recevoir le filetage Fi de l'embase de serrage 91, et ainsi pouvoir monter chaque système de couplage étanche 90 sur la plaque de serrage inférieure 46.

Aussi, chaque système de couplage étanche 90 s'apparente à un système de type « vis/écrou », la « vis » étant formée par l'embase de serrage 91 et l' « écrou » étant formé par le lamage fileté 102b de la plaque de serrage inférieure 46.

De façon avantageuse, il est également à noter que l'embase de serrage 91 comporte une première surface d'appui 91c, située dans le premier conduit interne 91a. De même, l'embase d'appui 92 comporte une deuxième surface d'appui 92c. Ainsi, les première 91c et deuxième 92c surfaces d'appui sont en contact l'une avec l'autre selon un contact de type plan sur plan C_{PP}, formé dans le sens d'écoulement du gaz G. Il est donc possible d'avoir un contact plan sur plan C_{PP} lors du serrage de l'embase de serrage filetée 91 dans le lamage fileté 102b de la plaque de serrage inférieure 46. Cette action va donc comprimer le joint d'étanchéité 93 sur la portée de lamage de la plaque de serrage inférieure 46. C'est alors le couple de serrage imprimé par l'embase de serrage 91 qui permet d'assurer la contrainte nécessaire à l'étanchéité sur le joint 93.

Cette jonction permet en outre de rattraper un éventuel défaut de perpendicularité grâce au jeu que l'on va mettre entre l'embase d'appui 92 et l'embase de serrage 91. La finalité est de pouvoir obtenir un appui réparti sur la portée de joint et le contact plan de celui-ci avec le fond du lamage.

En outre, l'embase d'appui 92 comporte un logement 92l, sur sa première extrémité 92a, pour loger le joint d'étanchéité 93.

De façon avantageuse, l'embase de serrage 91 et l'embase d'appui 92 sont réalisées dans le même matériau que la plaque de serrage inférieure 46, notamment en acier inoxydable austénitique, en particulier de type 310S. De cette façon, les dilatations thermiques sont identiques.

Par ailleurs, le diamètre nominal de l'embase de serrage filetée 91 et du lamage fileté 102b de la plaque de serrage inférieure 46 peuvent être de M36.

Avant mise en place et serrage, l'embase de serrage 91 et le lamage fileté 102b peuvent être recouverts d'une pâte anti-grippant résistante à haute température pour faciliter le démontage et pour éviter le phénomène de soudage diffusion dans les filets lors du cyclage thermique. Cette pâte anti-grippant permet également de lubrifier la liaison et résiste à la corrosion. Elle permet d'éviter le blocage et l'usure excessive de pièces exposées à des températures extrêmes ou en atmosphère dite agressive, par exemple dans le cas de filetages de machines thermiques, de tubulures pour gaz chauds, de brûleurs, de soupapes, de freins à disque, de bougies, d'attaches d'échappements, de galets, de boulons, de collets, etc. Sa formulation à base de cuivre, aluminium et graphite peut protéger les pièces métalliques et assurer leur démontage.

Divers essais pour tester le niveau d'étanchéité ont été réalisés avec des joints d'étanchéité en mica et des joins d'étanchéité métalliques. Il est apparu clairement que l'usage de joints d'étanchéité 93 métalliques en forme de « C » permet d'obtenir la meilleure étanchéité dans le temps tout en limitant fortement le taux de fuite. De plus, ils peuvent être remplacés aisément.

Bien entendu, l'invention n'est pas limitée aux exemples de réalisation qui viennent d'être décrits. Diverses modifications peuvent y être apportées par l'homme du métier.

## Revendications

1. Ensemble (80), comportant :
- un empilement (20) à oxydes solides de type SOEC/SOFC fonctionnant à haute température, comportant :
- une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
- un système de serrage (60) de l'empilement (20) à oxydes solides de type SOEC/SOFC, comportant une plaque de serrage supérieure (45) et une plaque de serrage inférieure (46), entre lesquelles l'empilement (20) à oxydes solides de type SOEC/SOFC est enserré, chaque plaque de serrage (45, 46) comportant au moins deux orifices de serrage (54), le système de serrage (60) comportant en outre :
- au moins deux tiges de serrage (55) destinées à s'étendre chacune au travers d'un orifice de serrage (54) de la plaque de serrage supérieure (45) et au travers d'un orifice de serrage (54) correspondant de la plaque de serrage inférieure (46) pour permettre l'assemblage entre elles des plaques de serrage supérieure (45) et inférieure (46),
- des moyens de serrage (56, 57, 58) au niveau de chaque orifice de serrage (54) des plaques de serrage supérieure (45) et inférieure (46) destinés à coopérer avec lesdites au moins deux tiges de serrage (55) pour permettre l'assemblage entre elles des plaques de serrage supérieure (45) et inférieure (46),
**caractérisé en ce qu'**il comporte en outre :
- au moins un système de couplage étanche à haute température (90) de l'empilement (20) à oxydes solides de type SOEC/SOFC, monté dans l'une au moins des plaques de serrage supérieure (45) et inférieure (46), comportant :
- une embase de serrage (91), comprenant un filetage (Fi) sur sa surface extérieure (Sa) à une extrémité (91e) montée dans ladite l'une au moins des plaques de serrage supérieure (45) et inférieure (46), l'embase de serrage (91) comprenant un premier conduit interne traversant (91a) pour permettre le passage d'un tube (103) d'entrée et/ou de sortie de gaz (G),
- une embase d'appui (92), située dans le premier conduit interne (91a) de l'embase de serrage (91), dont une deuxième extrémité (92b) est destinée à être fixée audit tube (103) d'entrée et/ou de sortie de gaz (G), l'embase d'appui (92) comprenant un deuxième conduit interne traversant (92i) pour permettre le passage de gaz (G) provenant dudit tube (103) et/ou de l'empilement (20) à oxydes solides de type SOEC/SOFC,
- un joint d'étanchéité (93), présentant une forme de « C », positionné contre une première extrémité (92a), opposée à la deuxième extrémité (92b), de l'embase d'appui (92),
et **en ce que** ladite l'une au moins des plaques de serrage supérieure (45) et inférieure (46) comporte au moins un conduit traversant de passage (102) de gaz (G), destiné à être en communication fluidique avec l'empilement (20) à oxydes solides de type SOEC/SOFC et ledit tube (103) d'entrée et/ou de sortie de gaz (G), ledit au moins un conduit de passage (102) comprenant :
- une surface d'appui (102a) du joint d'étanchéité (93) de sorte que le joint d'étanchéité (93) soit positionné entre la surface d'appui (102a) et la première extrémité (92a) de l'embase d'appui (92),
- un lamage fileté (102b) pour recevoir le filetage (Fi) de l'embase de serrage (91),
et **en ce que** le joint d'étanchéité (93) est formé par un joint métallique flexible en forme de « C », comprenant une âme constituée par un ressort hélicoïdal métallique et une première enveloppe en métal dans laquelle est encastré le ressort.

2. Ensemble selon la revendication 1, **caractérisé en ce que** l'embase de serrage (91) comporte une première surface d'appui (91c), située dans le premier conduit interne (91a), et **en ce que** l'embase d'appui (92) comporte une deuxième surface d'appui (92c), les première (91c) et deuxième (92c) surfaces d'appui étant en contact l'une avec l'autre selon un contact de type plan sur plan (C_{PP}), formé dans le sens d'écoulement du gaz (G).

3. Ensemble selon la revendication 1 ou 2, **caractérisé en ce que** l'embase d'appui (92) comporte un logement (92l), sur sa première extrémité (92a), pour loger au moins partiellement le joint d'étanchéité (93).

4. Ensemble selon l'une des revendications précédentes, **caractérisé en ce que** l'embase de serrage (91) et l'embase d'appui (92) sont réalisées dans le même matériau que ladite l'une au moins des plaques de serrage supérieure (45) et inférieure (46).

5. Ensemble selon l'une quelconque des revendications précédentes, **caractérisé en ce que** le joint métallique flexible en forme de « C » comprend une seconde enveloppe en métal dans laquelle est encastrée la première enveloppe.

6. Ensemble selon l'une quelconque des revendications précédentes, **caractérisé en ce qu'**il comporte une plaque terminale supérieure (43) et une plaque terminale inférieure (44), entre lesquelles la pluralité de cellules électrochimiques (41) et la pluralité d'interconnecteurs intermédiaires (42) sont enserrées.

7. Ensemble selon l'une quelconque des revendications précédentes, **caractérisé en ce que** ladite au moins l'une des plaques de serrage supérieure (45) et inférieure (46) est fabriquée par une technique de fabrication additive, étant notamment réalisée en acier austénitique réfractaire.

8. Ensemble selon l'une quelconque des revendications précédentes, **caractérisé en ce que** ladite au moins l'une des plaques de serrage supérieure (45) et inférieure (46) présente une épaisseur comprise entre 20 et 30 mm, notamment de l'ordre de 25 mm.

9. Système, **caractérisé en ce qu'**il comporte :
- un ensemble (80) selon l'une quelconque des revendications précédentes,
- un four (10), auquel est raccordé au moins un tube (103) d'entrée et/ou de sortie de gaz (G), et sur lequel l'empilement (20) à oxydes solides de type SOEC/SOFC fonctionnant à haute température est couplé pour l'amenée et la sortie des gaz par le biais dudit au moins un système de couplage étanche à haute température (90).

10. Système selon la revendication 9, **caractérisé en ce que** l'embase d'appui (92) est soudée, notamment par soudure de type TIG et/ou par soudure à l'arc, sur l'extrémité dudit au moins un tube (103) d'entrée et/ou de sortie de gaz (G), dans son alignement.

## Patentansprüche

1. Baugruppe (80), umfassend:
- einen Stapel (20) mit Festoxiden vom Typ SOEC/SOFC, die bei hoher Temperatur arbeiten, umfassend:
- eine Vielzahl von elektrochemischen Zellen (41), die jeweils aus einer Kathode, einer Anode und einem zwischen der Kathode und der Anode eingefügten Elektrolyten gebildet sind, und eine Vielzahl von Zwischenverbindern (42), die jeweils zwischen zwei aneinandergrenzenden elektrochemischen Zellen (41) angeordnet sind,
- ein Spannsystem (60) für den Stapel (20) mit Festoxiden vom Typ SOEC/SOFC, das eine obere Spannplatte (45) und eine untere Spannplatte (46) umfasst, zwischen denen der Stapel (20) mit Festoxiden vom Typ SOEC/SOFC eingespannt ist, wobei jede Spannplatte (45, 46) mindestens zwei Spannöffnungen (54) umfasst, wobei das Spannsystem (60) weiter umfasst:
- mindestens zwei Spannschäfte (55), die dazu bestimmt sind, sich jeweils durch eine Spannöffnung (54) der oberen Spannplatte (45) und durch eine entsprechende Spannöffnung (54) der unteren Spannplatte (46) zu erstrecken, um das Zusammenfügen der oberen (45) und der unteren Spannplatte (46) miteinander zu ermöglichen,
- Spannmittel (56, 57, 58) im Bereich jeder Spannöffnung (54) der oberen (45) und der unteren Spannplatte (46), die dazu bestimmt sind, mit den mindestens zwei Spannschäften (55) zusammenzuwirken, um das Zusammenfügen der oberen (45) und der unteren Spannplatte (46) miteinander zu ermöglichen,
**dadurch gekennzeichnet, dass** sie weiter umfasst:
- mindestens ein bei hoher Temperatur dichtes Kopplungssystem (90) für den Stapel (20) mit Festoxiden vom Typ SOEC/SOFC, das in mindestens einer aus der oberen (45) und der unteren Spannplatte (46) angebracht ist, umfassend:
- eine Spannbasis (91), die an ihrer Außenfläche (Sa) an einem Ende (91e), das in der mindestens einen aus der oberen (45) und der unteren Spannplatte (46) angebracht ist, ein Gewinde (Fi) umfasst, wobei die Spannbasis (91) einen ersten inneren Durchgangskanal (91a) umfasst, um den Durchtritt eines Rohres (103) für den Eintritt und/oder den Austritt von Gas (G) zu ermöglichen,
- eine Stützbasis (92), die sich in dem ersten inneren Kanal (91a) der Spannbasis (91) befindet, von der ein zweites Ende (92b) dazu bestimmt ist, an dem Rohr (103) für den Eintritt und/oder den Austritt von Gas (G) befestigt zu werden, wobei die Stützbasis (92) einen zweiten inneren Durchgangskanal (92i) umfasst, um den Durchtritt von Gas (G) aus Richtung des Rohres (103) und/oder des Stapels (20) mit Festoxiden vom Typ SOEC/SOFC zu ermöglichen,
- eine Dichtung (93), die eine "C"-Form aufweist, die an einem dem zweiten Ende (92b) gegenüberliegenden ersten Ende (92a) der Stützbasis (92) positioniert ist,
und dadurch, dass die mindestens eine aus deroberen (45) und der unteren Spannplatte (46) mindestens einen Durchgangskanal für den Durchtritt (102) von Gas (G) umfasst, der dazu bestimmt ist, mit dem Stapel (20) mit Festoxiden vom Typ SOEC/SOFC und dem Rohr (103) für den Eintritt und/oder den Austritt von Gas (G) in Fluidkommunikation zu stehen, wobei der mindestens eine Durchtrittskanal (102) umfasst:
- eine Stützfläche (102a) für die Dichtung (93), sodass die Dichtung (93) zwischen der Stützfläche (102a) und dem ersten Ende (92a) der Stützbasis (92) positioniert ist,
- eine Gewindesenkung (102b), um das Gewinde (Fi) der Spannbasis (91) aufzunehmen,
und dadurch, dass die Dichtung (93) von einer flexiblen metallischen Dichtung in "C"-Form gebildet wird, die einen aus einer metallischen Schraubenfeder bestehenden Kern und eine erste Hülle aus Metall umfasst, in die die Feder eingebettet ist.

2. Baugruppe nach Anspruch 1, **dadurch gekennzeichnet, dass** die Spannbasis (91) eine erste Stützfläche (91c) umfasst, die sich in dem ersten inneren Kanal (91a) befindet, und dadurch, dass die Stützbasis (92) eine zweite Stützfläche (92c) umfasst, wobei die erste (91c) und die zweite Stützfläche (92c) gemäß einem Kontakt vom Typ flach auf flach (Cₚₚ), der in der Strömungsrichtung des Gases (G) gebildet wird, miteinander in Kontakt stehen.

3. Baugruppe nach Anspruch 1 oder 2, **dadurch gekennzeichnet, dass** die Stützbasis (92) an ihrem ersten Ende (92a) eine Aufnahme (92l) umfasst, um mindestens teilweise die Dichtung (93) aufzunehmen.

4. Baugruppe nach einem der vorstehenden Ansprüche, **dadurch gekennzeichnet, dass** die Spannbasis (91) und die Stützbasis (92) aus demselben Material hergestellt sind wie die mindestens eine aus der oberen (45) und der unteren Spannplatte (46).

5. Baugruppe nach einem der vorstehenden Ansprüche, **dadurch gekennzeichnet, dass** die flexible metallische Dichtung in "C"-Form eine zweite Hülle aus Metall umfasst, in die die erste Hülle eingebettet ist.

6. Baugruppe nach einem der vorstehenden Ansprüche, **dadurch gekennzeichnet, dass** sie eine obere Abschlussplatte (43) und eine untere Abschlussplatte (44) umfasst, zwischen denen die Vielzahl von elektrochemischen Zellen (41) und die Vielzahl von Zwischenverbindern (42) eingespannt sind.

7. Baugruppe nach einem der vorstehenden Ansprüche, **dadurch gekennzeichnet, dass** die mindestens eine aus der oberen (45) und der unteren Spannplatte (46) durch eine additive Fertigungstechnik gefertigt ist, wobei sie insbesondere aus feuerfestem austenitischem Stahl hergestellt ist.

8. Baugruppe nach einem der vorstehenden Ansprüche, **dadurch gekennzeichnet, dass** die mindestens eine aus der oberen (45) und der unteren Spannplatte (46) eine Dicke im Bereich zwischen 20 und 30 mm, insbesondere in der Größenordnung von 25 mm, aufweist.

9. System, **dadurch gekennzeichnet, dass** es umfasst:
- eine Baugruppe (80) nach einem der vorstehenden Ansprüche,
- einen Ofen (10), an den mindestens ein Rohr (103) für den Eintritt und/oder den Austritt von Gas (G) angeschlossen ist und an den der Stapel (20) mit bei hoher Temperatur arbeitenden Festoxiden vom Typ SOEC/SOFC für das Zuführen und den Austritt der Gase mittels des mindestens einen bei hoher Temperatur dichten Kopplungssystems (90) gekoppelt ist.

10. System nach Anspruch 9, **dadurch gekennzeichnet, dass** die Stützbasis (92) insbesondere durch Schweißung vom Typ TIG und/oder durch Lichtbogenschweißung an das Ende des mindestens einen Rohrs (103) für den Eintritt und/oder den Austritt von Gas (G) in seiner Flucht geschweißt ist.

## Claims

1. Assembly (80), including:
- a solid-oxide pack (20) of the SOEC/SOFC type operating at high temperature, including:
- a plurality of electrochemical cells (41) each formed by a cathode, an anode and an electrolyte interposed between the cathode and the anode, and a plurality of intermediate interconnectors (42) each arranged between two adjacent electrochemical cells (41),
- a system (60) for clamping the solid-oxide pack (20) of the SOEC/SOFC type, including a top clamping plate (45) and a bottom clamping plate (46), between which the solid-oxide pack (20) of the SOEC/SOFC type is clamped, each clamping plate (45, 46) including at least two clamping orifices (54), the clamping system (60) furthermore including:
- at least two clamping rods (55) intended each to extend through a clamping orifice (54) in the top clamping plate (45) and through a corresponding clamping orifice (54) in the bottom clamping plate (46) to allow assembly of the top (45) and bottom (46) clamping plates with each other,
- clamping means (56, 57, 58) at each clamping orifice (54) of the top (45) and bottom (46) clamping plates intended to cooperate with said at least two clamping rods (55) to allow the assembly of the top (45) and bottom (46) clamping plates with each other,
**characterised in that** it furthermore includes:
- at least one coupling system (90) gastight at high temperature of the solid-oxide pack (20) of the SOEC/SOFC type, mounted in at least one of the top (45) and bottom (46) clamping plates, including:
- a clamping base (91), comprising a thread (Fi) on its external surface (Sa) at an end (91e) mounted in said at least one of the top (45) and bottom (46) clamping plates, the clamping base (91) comprising a first through internal pipe (91a) to enable an inlet and/or outlet tube (103) for gas (G) to pass,
- a support base (92), located in the first internal pipe (91a) of the clamping base (91), a second end (92b) of which is intended to be attached to said inlet and/or outlet tube (103) for gas (G), the support base (92) comprising a second internal through pipe (92i) to allow passage of gas (G) coming from said tube (103) and/or from the solid-oxide pack (20) of the SOEC/SOFC type,
- a seal (93), having a C shape, positioned against a first end (92a), opposite to the second end (92b), of the support base (92),
and **in that** said at least one of the top (45) and bottom (46) clamping plates includes at least one through passage pipe (102) for gas (G), intended to be in fluid communication with the solid-oxide pack (20) of the SOEC/SOFC type and said inlet and/or outlet tube (103) for gas (G), said at least one passage pipe (102) comprising:
- a surface (102a) for supporting the seal (93) so that the seal (93) is positioned between the support surface (102a) and the first end (92a) of the support base (92),
- a threaded countersink (102b) for receiving the thread (Fi) of the clamping base (91),
and **in that** the seal (93) is formed by a flexible metal joint in a C shape, comprising a core consisting of a metal helical spring and a first metal envelope in which the spring is embedded.

2. Assembly according to claim 1, **characterised in that** the clamping base (91) includes a first support surface (91c), located in the first internal pipe (91a), and **in that** the support base (92) includes a second support surface (92c), the first (91c) and second (92c) support surface being in contact with each other in accordance with the contact of the plane-on-plane type (C_{PP}), formed in the direction of flow of the gas (G).

3. Assembly according to claim 1 or 2, **characterised in that** the support base (92) includes a housing (92l), on its first end (92a), for at least partially housing the seal (93).

4. Assembly according to one of the preceding claims, **characterised in that** the clamping plates (91) and the support base (92) are produced from the same material as said at least one of the top (45) and bottom (46) clamping plates.

5. Assembly according to any one of the preceding claims, **characterised in that** the flexible metal joint in the shape of a C comprises a second metal envelope in which the first envelope is embedded.

6. Assembly according to any one of the preceding claims, **characterised in that** it includes a top end plate (43) and a bottom end plate (44), between which the plurality of electrochemical cells (41) and the plurality of intermediate interconnectors (42) are gripped.

7. Assembly according to any one of the preceding claims, **characterised in that** said at least one of the top (45) and bottom (46) clamping plates is manufactured by an additive manufacturing technique, being in particular produced from refractory austenitic steel.

8. Assembly according to any one of the preceding claims, **characterised in that** said at least one of the top (45) and bottom (46) clamping plates has a thickness of between 20 and 30 mm, in particular of the order of 25 mm.

9. System **characterised in that** it includes:
- an assembly (80) according to any one of the preceding claims,
- a furnace (10), to which at least one inlet and/or outlet tube (103) for gas (G) is connected, and to which the solid-oxide pack (20) of the SOEC/SOFC type operating at high temperature is coupled for feeding and discharging the gases by means of said at least coupling system gastight at high temperature (90).

10. System according to claim 9, **characterised in that** the support base (92) is welded, in particular by welding of the TIG type and/or by arc welding, on the end of said at least one inlet and/or outlet tube (103) for gas (G), in line therewith.
